# EUROPÄISCHE PATENTSCHRIFT

(11) **EP 3 023 214 B1**
(45) Veröffentlichungstag und Bekanntmachung des Hinweises auf die Patenterteilung: **06.03.2019**
(21) Anmeldenummer: 15193937.8
(22) Anmeldetag: 10.11.2015
(51) Int. Cl.: B29C 33/02, B29C 45/73, B29C 44/58, B29C 44/34

(54) **SPRITZGUSSWERKZEUG UND VERFAHREN ZUR HERSTELLUNG EINES SPRITZGUSS-BAUTEILS**
INJECTION MOULDING TOOL AND METHOD FOR PRODUCING AN INJECTION MOULDING COMPONENT
OUTIL DE MOULAGE PAR INJECTION ET PROCEDE DE FABRICATION D'UN COMPOSANT D'OUTIL DE MOULAGE PAR INJECTION

(30) Priorität: 20.11.2014 DE 102014223665
(43) Veröffentlichungstag der Anmeldung: 25.05.2016
(60) Teilanmeldung: 18194236.8
(73) Patentinhaber: Samvardhana Motherson Innovative Autosystems B.V. & Co. KG, 63486 Bruchköbel (DE)
(72) Erfinder: KRAPPMANN, Matthias, 91301 Forchheim (DE)
(74) Vertreter: Isarpatent

(56) Entgegenhaltungen:
- EP-A1- 1 736 296
- WO-A1-2012/018338
- CN-B- 103 112 130
- US-A- 3 185 432
- US-A- 4 390 485
- US-A1- 2003 215 540

## Beschreibung

### GEBIET DER ERFINDUNG

Die vorliegende Erfindung betrifft ein Spritzgusswerkzeug zur Herstellung eines Spritzguss-Bauteils und insbesondere eines geschäumten Spritzguss-Bauteils, sowie ein Verfahren zur Herstellung des Spritzguss-Bauteils und ein derartiges Spritzguss-Bauteil.

### TECHNISCHER HINTERGRUND

Aus der DE 10 2010 018 590 A1 ist ein Spritzgusswerkzeug bekannt, welches aus zwei zusammenwirkenden Werkzeughälften besteht. Die beiden Werkzeughälften schließen in bekannter Weise eine Kavität ein, die der Form des zu spritzenden Formteils entspricht. Die Kavitätsoberfläche ist mit einer Isolierschicht versehen, auf welche eine Metallschicht aufgebracht ist, die vom Strom durchflossen wird. Dabei wird ein Werkzeugeinsatz aus Stahl mit einer Zirkonoxid-Schicht mit einer Schichtdicke zwischen 300pm und 400pm durch Flammspritzen beschichtet. Dann wird diese Zirkonoxid-Schicht poliert. Anschließend wird auf die Zirkonoxid-Schicht mittels Gasphasenabscheidung eine dünne metallische Chromschicht von 5pm aufgebracht.

Die dünne Metallschicht hat den Nachteil, dass sie leicht verschleißen und verkratzen kann. Bei einer beschädigten Metallschicht kann außerdem der Stromfluss durch die Metallschicht beeinträchtigt werden kann.

Des Weiteren ist aus der DE 10 2009 053 517 A1 eine Spritzgießmaschine bekannt. Die Spritzgießmaschine ist mit einer von wenigstens zwei Teilen eines Werkzeugs ausgebildeten Kavität versehen, in welche eine Kunststoffschmelze einbringbar ist. Ein Werkzeugteil weist dabei eine metallische formgebende Oberfläche auf. Des Weiteren ist das Werkzeugteil mit einem Isolierbereich versehen. Dabei wird eine Isolierschicht durch Sintermetall oder geschäumtes Aluminium gebildet. Dahinter befindet sich wiederum ein metallischer Bereich, in welchem an sich bekannte Kühlbohrungen angeordnet sind, die mit einem Medium gespült werden können. Die Heizung der metallischen Oberfläche erfolgt durch eine Heizvorrichtung, wie einen IR-Strahler, Halogenlampen oder eine induktive Heizvorrichtung.

Solche Heizvorrichtungen, wie insbesondere IR-Strahler und Halogenlampen, können nur eingesetzt werden, solang die Werkzeugteile der Spritzgießmaschine nicht zusammengefahren sind. Eine induktive Heizvorrichtung ist wiederum nicht für jede metallische formgebende Oberfläche geeignet.

Weiter ist aus der US 4,390,485 ein Verfahren und eine Vorrichtung bekannt zum schnellen Heizen einer Spritzgussformoberfläche oder Abschnitten davon, vor dem Einspritzen von schäumbarem Kunststoffharz oder Formmassen. Die Vorrichtung weist ein oder mehrere dünne Metallflächenbleche oder Bänder in dem Formhohlraum auf, welche die Abschnitte der Form abdecken, wo ein glattes Oberflächenfinish auf dem Produkt gewünscht ist. Die Form weist eine fixe Formhälfte und eine Formhälfte auf, die an einer beweglichen Platte befestigt ist, welche in einer geschlossenen Stellung einen Formhohlraum umschließen. Die fixe Formhälfte weist eine Einspritzdüse und einen Verschlussstift auf, wobei die Einspritzdüse mit einem Trichter der Formhälfte verbunden ist, welcher wiederum mit dem Formhohlraum verbunden ist. Die Innenseite des Formhohlraums bildet eine dünne Metallplatte, welche der Form der fixen Formhälfte entspricht. Die dünne Metallplatte weist eine Öffnung auf, um eine Verbindung zwischen dem Trichter der fixen Formhälfte und dem Formhohlraum bereitzustellen. Die dünne Metallplatte erstreckt sich des Weiteren zu beiden Seiten aus der Form heraus, wo elektrische Kabelanbindungen an der Metallplatte angebracht sind. In einer Ausführungsform weisen beide Formhälften jeweils eine dünne Metallplatte auf, wobei zum Öffnung und Schließen der Form jeweils separate elektrische Kabelanbindungen an den Metallplatten angebracht sind.

Aus der US 2003/0215540 A1 ist außerdem eine Spritzgussform bekannt. Die Spritzgussform weist dabei zwei Formhälften auf, wobei eine Formhälfte eine bewegliche Übertragungsplatte aufweist, die durch elektrisches Widerstandheizen beheizbar ist.

### ZUSAMMENFASSUNG DER ERFINDUNG

Vor diesem Hintergrund liegt der vorliegenden Erfindung die Aufgabe zugrunde, ein Spritzgusswerkzeug sowie ein Verfahren zur verbesserten Herstellung eines Spritzguss-Bauteils und insbesondere eines geschäumten Spritzguss-Bauteils bereitzustellen. Erfindungsgemäß wird diese Aufgabe durch ein Spritzgusswerkzeug mit den Merkmalen des Patentanspruchs 1 und ein Verfahren mit den Merkmalen des Patentanspruchs 11 gelöst. Die Erkenntnis der vorliegenden Erfindung besteht darin, dass mittels eines elektrisch beheizbaren Heizplattenelements, das zumindest einen Teil des Formhohlraums des Spritzgusswerkzeugs bildet, dieser Bereich des Spritzgusswerkzeugs sehr schnell, einfach und gezielt aufgeheizt werden kann, wobei das Heizplattenelement im Gegensatz zu einer Beschichtung weniger empfindlich gegenüber Verkratzen ist und außerdem leicht ausgetauscht werden kann im Gegensatz zu einer metallischen Beschichtung. Das Heizplattenelement kann zudem Toleranzen der Formhälfte ausgleichen und einfach an die Kontur des auszubildenden Hohlraums angepasst werden. Im Falle eines Blechteils als Heizplattenelement kann dieses z.B. kostengünstig durch Tiefziehen hergestellt werden. Ein elektrisches Aufheizen des Heizplattenelements kann des Weiteren auch in einem geschlossenen Zustand des Spritzgusswerkzeugs insbesondere unmittelbar vor oder auch während dem Einspritzen durchgeführt werden.

Die Idee der vorliegenden Erfindung besteht nun darin, zumindest einen Teil des Formhohlraums des Spritzgusswerkzeugs mit einem elektrisch beheizbaren Heizplattenelement auszubilden, wobei das Heizplattenelement austauschbar an der Innenseite der Formhälfte mittels wenigstens eines Befestigungsmittels befestigt ist. Als Befestigungsmittel kann dabei z.B. ein elektrisch isolierendes Klebemittel eingesetzt werden. Ein solches Klebemittel erlaubt bei Bedarf ein Ablösen des Heizplattenelements von der Formhälfte und ein Austauschen des Heizplattenelements, wobei in diesem Fall das Klebemittel ebenfalls von der Formhälfte entfernt und ein neues Heizplattenelement mit einem Klebemittel in der Formhälfte wieder befestigt wird.

Es lassen sich damit einerseits durch das elektrische Beheizen Spritzguss-Bauteile mit eine Oberflächenqualität ohne oder im Wesentlichen ohne unerwünschte Silberschlieren herstellen. Andererseits ist das Heizplattenelement weniger empfindlich für Verkratzen und kann bei Bedarf problemlos ausgetauscht oder ersetzt werden, ohne dass die ganze Formhälfte erneuert werden muss.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausgestaltung der Erfindung ist das wenigstens eine Befestigungsmittel zum Befestigen des Heizplattenelements an der zugeordneten Formhälfte elektrisch isolierend ausgebildet oder vorgesehen, um eine elektrische Isolierung zwischen dem Heizplattenelement und der zugeordneten Formhälfte bereitzustellen. Dabei kann das wenigstens eine Befestigungsmittel auch thermisch isolierend zwischen dem Heizplattenelement und der zugeordneten Formhälfte vorgesehen werden, je nach Funktion und Einsatzzweck.

Gemäß einer Ausgestaltung der Erfindung ist das wenigstens eine Befestigungsmittel ein Klebemittel z.B. eine Klebeschicht, ein flüssiger Klebstoff oder ein pastöser Klebstoff. In einer Ausgestaltung der Erfindung ist das Klebemittel außerdem elektrisch isolierend. Dies hat den Vorteil, dass das Klebemittel einerseits das Heizplattenelement an der Formhälfte befestigt und andererseits das Heizplattenelement und die Formhälfte gleichzeitig voneinander elektrisch isoliert.

Gemäß der Erfindung steht wenigstens ein Abschnitt des Heizplattenelements aus der zugeordneten Formhälfte hervor. Dies hat den Vorteil, dass das Heizplattenelement sehr einfach mit wenigstens einem Kontakt versehen werden kann zum Anschließen des Heizplattenelements an eine Energiequelle, um das Heizplattenelement durch Anlegen einer geeigneten Spannung oder eines geeigneten Stroms aufzuheizen. Die Energiequelle weist dabei wenigstens eine Stromquelle und/oder Spannungsquelle auf.

Gemäß der Erfindung weist wenigstens eine Formhälfte eine Zuführung zum Zuführen von Spritzgussmaterial, insbesondere schäumendem Spritzgussmaterial auf. Die Zuführung ist dabei in der Formhälfte oder dem Abschnitt der Formhälfte ohne Heizplattenelement vorgesehen werden. Dies hat den Vorteil, dass die Zuführung gegenüber der Formhälfte nicht zusätzlich elektrisch isoliert werden muss.

In einer anderen Ausgestaltung der Erfindung ist die Zuführung mit einer Zuführungseinrichtung für schäumendes Spritzgussmaterial verbunden oder gekoppelt. Mittels der Zuführungseinrichtung wird mit einem chemischen Treibmittel und/oder einem physikalischen Treibmittel versehenes Spritzgussmaterial in dem Formhohlraum des Spritzgusswerkzeugs eigespritzt zum Herstellen eines geschäumten Spritzguss-Bauteils.

Gemäß einer Ausgestaltung der Erfindung weist wenigstens eine der Formhälften eine zusätzliche Temperiereinrichtung auf, wobei die Temperiereinrichtung zum Kühlen und/oder Heizen der Formhälfte und gegebenenfalls eines mit der Formhälfte verbundenen Heizplattenelements ausgebildet ist. Auf diese Weise kann das Aufheizen bzw. Abkühlen des Heizplattenelements und des Formhohlraums unterstützt werden.

In einer Ausgestaltung der Erfindung ist das Heizplattenelement und/oder das wenigstens eine Befestigungsmittel nach mindestens einem Spritzgusszyklus auswechselbar. Insbesondere bei einem Klebemittel als Befestigungsmittels des Heizplattenelements kann dieses zusammen mit dem Heizplattenelement nach wenigstens einem oder vorzugsweise einer Vielzahl von Spritzgusszyklen, falls erforderlich, leicht entfernt und ersetzt werden.

In einer anderen Ausgestaltung der Erfindung ist das Heizplattenelement ein Blechteil, z.B. aus Aluminium, insbesondere einer Aluminiumlegierung, oder Stahl oder einer Stahllegierung. Ein solches Blechteil ist kostengünstig in der Herstellung und lässt sich leicht umformen, z.B. durch Tiefziehen.

Gemäß einer Ausgestaltung der Erfindung weist das Blechteil eine Dicke in einem Bereich von 0,1mm bis 4mm auf. Ein solches verhältnismäßig dünnes Blechteil lässt sich besonders schnell elektrisch aufheizen.

In einer Ausgestaltung der Erfindung weist das Klebemittel eine Klebemittel-Schichtdicke von kleiner als 0,3mm auf. Die Erfindung ist jedoch auf die genannte Schichtdicke nicht beschränkt. Prinzipiell ist es auch möglich, dass die Schichtdicke zwischen 0,3mm und mehreren Millimetern liegt, je nach Funktion und Einsatzzweck.

Gemäß einer anderen Ausgestaltung der Erfindung ist an das Blechteil eine Spannung von größer 40V oder eine Stromstärke von größer 100A durch eine mit dem Blechteil verbundene Energiequelle anlegbar. Auf diese Weise kann ein eher dünnes Blechteil mit einer Dicke von z.B. kleiner als 4mm sehr schnell binnen Sekunden auf z.B. 100°C aufgeheizt werden. Beispielsweise kann das Blechteil auf eine Eispritztemperatur von z.B. zwischen 130°C bis 170°C aufgeheizt werden.

In einer Ausgestaltung der Erfindung erfolgt das Aufheizen des Heizplattenelements auf eine vorbestimmte Einspritz-Temperatur durch Anlegen einer Spannung oder eines Stroms an das Heizplattenelement mittels der Energiequelle.

In einer anderen Ausgestaltung der Erfindung erfolgt das Einspritzen eines mit einem chemischen Treibmittel und/oder einem physikalischen Treibmittel versehenen Kunststoffs als Spritzgussmaterial in den Formhohlraum des Spritzgusswerkzeugs zum Herstellen eines geschäumten Spritzgussteils. Ein solches geschäumtes Spritzgussteil kann mit einem geringeren Gewicht ohne Einbußen bei der Oberflächengüte hergestellt werden.

In einer weiteren Ausgestaltung der Erfindung kann wenigstens eine Formhälfte durch Kühlen und/oder Heizen der Formhälfte temperiert werden und dadurch bei Bedarf beispielsweise ein Kühlvorgang oder Heizvorgang des Spritzgusswerkzeugs unterstützt werden.

Das Aufheizen und/oder Kühlen des Heizplattenelements kann kontinuierlich oder diskontinuierlich erfolgen und entsprechend durch die von der Energiequelle angelegte Spannung oder Stromstärke gesteuert oder geregelt werden.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine Draufsicht auf ein Spritzgusswerkzeug gemäß der Erfindung;
- Fig. 2: eine Schnittansicht A-A des Spritzgusswerkzeugs gemäß Fig. 1 mit nur einem Heizplattenelement;
- Fig. 3: eine Schnittansicht B-B des Spritzgusswerkzeugs gemäß Fig. 1 mit nur einem Heizplattenelement;
- Fig. 4: eine Schnittansicht A-A des Spritzgusswerkzeugs gemäß Fig. 1 mit zwei Heizplattenelementen, wobei Fig. 4 Merkmale der Erfindung zeigt aber keine Ausführungsform wie beansprucht;
- Fig. 5: eine Schnittansicht B-B des Spritzgusswerkzeugs gemäß Fig. 1 mit zwei Heizplattenelementen, wobei Fig. 5 Merkmale der Erfindung zeigt aber keine Ausführungsform wie beansprucht; und
- Fig. 6: eine Schnittansicht des fertigen, mittels des Spritzgusswerkzeugs der Fig. 1 sowie der Fig. 2 und 3 hergestellten Bauteils.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

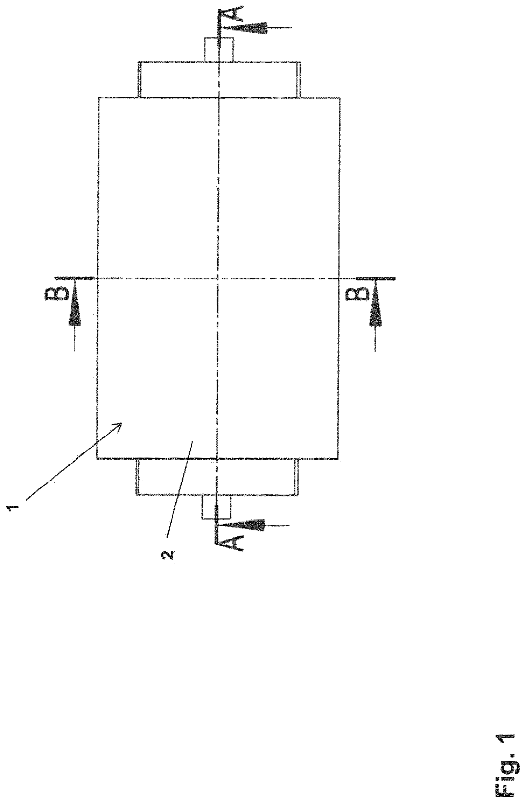

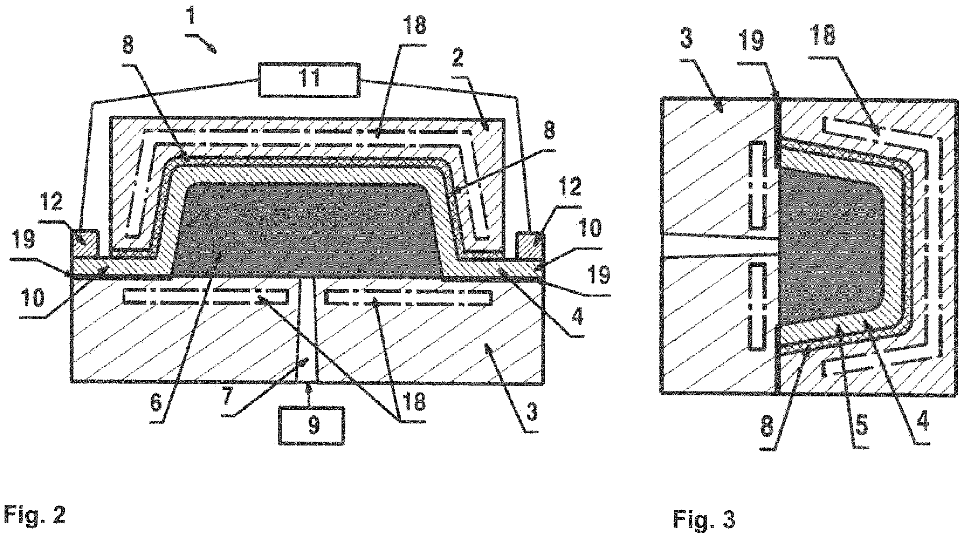

Fig. 1 zeigt eine Draufsicht auf ein Spritzgusswerkzeug 1 gemäß einer Ausführungsform der Erfindung, welches mit einem oder zwei Heizplattenelementen versehen werden kann. Fig. 2 zeigt dabei einen Schnitt A-A entlang einer Längsachse und Fig. 3 einen Schnitt B-B entlang einer Querachse des Spritzgusswerkzeugs 1 in Fig. 1, wobei das Spritzgusswerkzeug gemäß einem ersten Ausführungsbeispiel dabei lediglich ein Heizplattenelement aufweist, wie im Nachfolgenden erläutert wird.

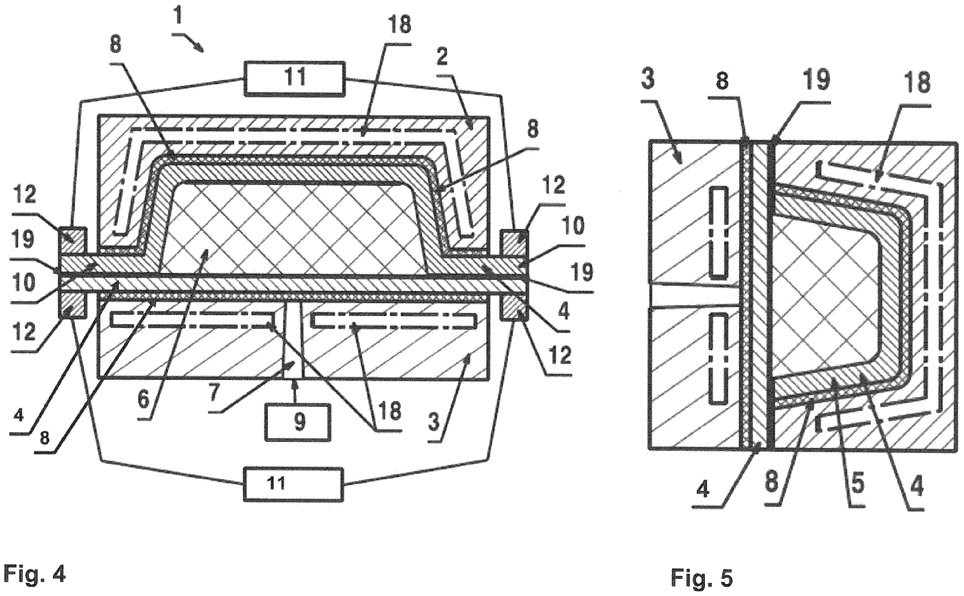

Die Fig. 4 und 5 zeigen wiederum ein nicht zur Erfindung gehörendes Beispiel des Spritzgusswerkzeugs gemäß Fig. 1. Fig. 4 zeigt hierbei einen Schnitt A-A entlang einer Längsachse und Fig. 5 einen Schnitt B-B entlang einer Querachse des Spritzgusswerkzeugs 1 in Fig. 1, wobei das Spritzgusswerkzeug gemäß diesem Beispiel dabei zwei Heizplattenelemente 4 aufweist, wie ebenfalls im Folgenden erläutert wird.

Das Spritzgusswerkzeug 1 weist dabei eine erste und eine zweite Formhälfte 2, 3 auf, wobei die Formhälften 2, 3 in Fig. 1, 2, 3, 4 und 5 rein schematisch und stark vereinfach dargestellt sind.

Auf der Innenseite der ersten Formhälfte 2 ist dabei, im Gegensatz zu einer zuvor mit Bezug auf den Stand der Technik beschriebenen metallischen Beschichtung, ein elektrisch beheizbares Heizplattenelement 4 austauschbar angebracht, wie in Fig. 2 und 3 gezeigt ist.

Als elektrisch beheizbares Heizplattenelement 4 kann dabei z.B. eine Metallplatte oder ein Blechteil 5 vorgesehen werden. Die Erfindung ist jedoch auf ein Blechteil 5 oder eine Metallplatte als Heizplattenelement 4 nicht beschränkt. Es kann jedes andere austauschbare Heizplattenelement vorgesehen werden, das elektrisch beheizbar insbesondere flächig oder vollflächig elektrisch beheizbar ist, durch Anlegen eines Stroms oder einer Spannung an das Heizplattenelement und des Weiteren zum Einsatz in einem Spritzgusswerkzeug geeignet ist. Der an das Heizplattenelement angelegte elektrische Strom wird dabei von dem Heizplattenelement in Wärme umgewandelt und so dass Heizplattenelement durch Widerstandheizen erwärmt.

In dem in Fig. 4 und 5 gezeigten, aber nicht zur Erfindung gehörenden Beispiel kann auch die zweite Formhälfte 3 zusätzlich oder alternativ zu der ersten Formhälfte 2 mit einem elektrisch beheizbaren Heizplattenelement 4 versehen sein, beispielsweise einem Blechteil.

In dem Fall, dass beide Formhälften 2, 3 jeweils mit einem elektrisch beheizbaren Heizplattenelement 4 versehen sind, wie in dem in Fig. 4 und 5 gezeigten Beispiel, sind die beiden Heizplattenelemente 4 geeignet voneinander elektrisch isoliert, so dass kein Kurzschluss entsteht, wenn an die Heizplattenelemente 4 jeweils eine Spannung oder Strom angelegt wird zum Aufheizen des jeweiligen Heizplattenelements 4, wie im nachfolgenden noch beschrieben wird.

Dabei kann, wie in dem Beispiel in Fig. 4 und 5 gezeigt ist, zur zusätzlichen elektrischen Isolierung der beiden Heizplattenelemente 4 beispielsweise eine elektrische Isolierung 19, insbesondere eine Lage aus einem elektrisch isolierenden Material, zwischen den beiden Heizplattenelementen 4 der ersten und zweiten Formhälfte 2, 3 vorgesehen sein.

Des Weiteren bildet das jeweilige Heizplattenelement 4 zusammen mit der gegenüberliegenden Formhälfte 3, wie in Fig. 2 und 3, oder dem anderen gegenüberliegenden Heizplattenelement, wie in Fig. 4 und 5, eine Kavität oder einen Formhohlraum 6.

In den Formhohlraum 6 wird dabei Spritzgussmaterial eingefüllt oder eingespritzt und geschäumt zur Herstellung eines geschäumten Spritzguss-Bauteils. Die Kavität oder der Formhohlraum 6 entspricht dabei der Form des herzustellenden geschäumten Spritzguss-Bauteils. Für das zu schäumende Spritzgussmaterial wird Kunststoff, beispielsweise ein Polymer oder Polymerwerkstoff, insbesondere ein Thermoplast, ein Duroplast, ein Elastomer und/oder ein thermoplastisches Elastomer eingesetzt und über wenigstens eine Zuführung 7 in den Formhohlraum 6 des Spritzgusswerkzeugs 1 eingespritzt, wie in Fig. 2, 3 bzw. in Fig. 4 und 5 beispielhaft und stark vereinfacht dargestellt ist. Beispielsweise werden Kunststoffe, insbesondere Polymerwerkstoffe wie Polyurethan (PU), Polycarbonat (PC), Polystyrol (PS) und dessen Copolymere wie z.B. Acrylnitril-Butadien-Styrol (ABS), alle Polyamide (PA), Polyoxymethylen (POM), Polymethylmethacrylat (PMMA) oder Polyolefine, wie z.B. Polypropylen (PP), oder thermoplastische Elastomere (TPE) wie z.B. thermoplastische Polyolefine (TPO) oderEthylen-Propylen-Dien-Kautschuk (EPDM) usw. verwendet.

Kunststoffe, wie z.B. thermoplastische Kunststoffe, können dabei z.B. optional durch Additive und/oder Füllstoffe für die Spritzgießverarbeitung und die spätere Verwendung modifiziert werden. Als Füllstoff können dabei beispielsweise Granulat, Fasern wie z.B. Glasfasern, Kohlenstofffasern, Aramidfasern, Basaltfasern, Keramikfasern, Naturfasern, Nylonfasern, Mineralverstärkungen oder Talkumverstärkungen usw. vorgesehen werden, je nach Funktion und Einsatzzweck. Die Erfindung ist jedoch auf die genannten Kunststoffe und Füllstoffe nicht beschränkt. Es kann jede Art von Kunststoff und Füllstoff eingesetzt werden, welcher zur Herstellung eines Spritzguss-Bauteils mit dem beschriebenen Spritzgusswerkzeug geeignet ist.

Das Schäumen des Spritzgussmaterials kann mittels eines chemischen Treibmittels und/oder eines physikalischen Treibmittels erfolgen, wie im Folgenden mit Bezug auf Fig. 4 noch näher beschrieben wird.

Das jeweilige elektrisch beheizbare Heizplattenelement 4 ist an der zugeordneten Formhälfte, d.h. der Formhälfte 2 in Fig. 2 und 3 sowie der Formhälfte 2 und der Formhälfte 3 in Fig. 4 und 5, austauschbar befestigt, beispielsweise mittels eines Klebemittels 8 als Befestigungsmittel. Das Klebemittel 8 ist dabei z.B. ein Klebstoff, insbesondere ein flüssiger oder pastöser Klebstoff, oder ein Klebefilm. Um mechanisch und thermisch belastet zu werden kann der Klebstoff z.B. zunächst aushärten bevor mit einem ersten Spitzgusszyklus begonnen wird.

Das Klebemittel 8 ist derart gewählt, dass es das Heizplattenelement 4 an der jeweiligen Formhälfte 2 bzw. 3 befestigt und wenigstens einen Spritzgusszyklus standhält, ohne dass das Heizplattenelement 4 sich von der Formhälfte 2 bzw. 3 ungewollt teilweise oder vollständig löst. In den in Fig. 2 und 3 bzw. Fig. 4 und 5 gezeigten Ausführungsbeispielen weist das Klebemittel 8 eine Klebemittelschicht-Dicke von z.B. kleiner als 0,3mm auf. Die Erfindung ist jedoch nicht auf diese Schichtdicke beschränkt. Je nach Funktion und Einsatzzweck kann das Klebemittel 8 auch eine Klebemittelschicht-Dicke von gleich oder größer 0,3mm aufweisen.

Des Weiteren ist das Klebemittel 8 vorzugsweise zusätzlich elektrisch isolierend, um das Heizplattenelement 4 und die zugeordnete Formhälfte 2 bzw. 3 voneinander elektrisch zu isolieren. Es kann jedoch auch jede andere Form der elektrischen Isolierung zusätzlich oder alternativ zu dem elektrisch isolierenden Klebemittel 8 vorgesehen werden, welche geeignet ist, die Formhälfte 2 bzw. 3 und das mit ihr verbundene Heizplattenelement 4 elektrisch zu isolieren, um einen Kurzschluss zwischen der Formhälfte 2 bzw. 3 und dem Heizplattenelement 4 zu verhindern. In einem Ausführungsbeispiel kann das Klebemittel 8 auch thermisch isolierend oder im Wesentlichen thermisch isolierend vorgesehen sein.

Statt eines Klebemittels 8 kann auch jede andere Art von Befestigungsmittel oder Kombination von Befestigungsmitteln vorgesehen werden, welches bzw. welche geeignet sind, das Heizplattenelement 4 austauschbar mit der Formhälfte 2 in dem Ausführungsbeispiel in Fig. 2 und 3 sowie der Formhälfte 2 bzw. Formhälfte 3 in dem Beispiel in Fig. 4 und 5 zu verbinden, so dass das Heizplattenelement 4 gegebenenfalls zusammen mit dem wenigstens einen Befestigungsmittel bei Bedarf ausgetauscht werden kann. Dabei ist ebenfalls eine elektrische Isolierung zwischen dem Heizplattenelement 4 und der Formhälfte 2 in dem Ausführungsbeispiel in Fig. 2 und 3 sowie zwischen dem Heizplattenelement und der Formhälfte 2 bzw. der Formhälfte 3 in dem Beispiel in Fig. 4 und 5 vorgesehen. Diese elektrische Isolierung kann durch das Befestigungsmittel oder die Kombination von Befestigungsmitteln selbst bereitgestellt werden und/oder durch eine elektrische Isolierung, welche unabhängig von dem Befestigungsmittel oder Kombination von Befestigungsmitteln ist.

Dabei wird in einem Ausführungsbeispiel lediglich das Heizplattenelement 4 mit dem Klebemittel 8 nach wenigstens einem oder vorzugsweise mehreren Spritzgusszyklen entfernt und ersetzt. Dies hat den Vorteil, dass nicht die gesamte Formhälfte ersetzt werden muss. Das Klebemittel 8 lässt sich zudem leicht von der Formhälfte lösen, insbesondere wenn die Formhälfte aus Metall ist.

Wie zuvor beschrieben wird als Heizplattenelement 4 beispielsweise ein Blechteil 5 eingesetzt. Das Blechteil 5 ist elektrisch beheizbar durch Anlegen eines Stroms bzw. einer Spannung an das Blechteil. Des Weiteren ist das Blechteil 5 als Heizplattenelement 4 für das Spritzgussverfahren geeignet temperaturbeständig. Die Form des Blechteils 5 kann zur Bereitstellung des gewünschten Formhohlraums 6 und des darin herzustellenden Bauteils beispielsweise durch Tiefziehen hergestellt werden oder durch jedes andere geeignete Verfahren oder jede andere geeignete Kombination von Verfahren.

Als Blechteil 5 wird beispielsweise ein Blechteil aus Aluminium, insbesondere einer Aluminiumlegierung, oder einem Stahl oder einer Stahllegierung verwendet. Die Erfindung ist jedoch auf die genannten Materialien nicht beschränkt. In dem in den Fig. 2 und 3 gezeigten Ausführungsbeispiel wird das Blechteil 5 an der Innenseite der ersten Formhälfte 2 des Spritzgusswerkzeugs 1 befestigt und in dem in den Fig. 4 und 5 gezeigten Beispiel ein Blechteil 5 an der Innenseite der ersten Formhälfte 2 und ein Blechteil 5 an der Innenseite der zweiten Formhälfte 3. Als Heizplattenelement 4 bildet das jeweilige Blechteil 5 dabei mit seiner dem Formhohlraum 6 zugewandten Seite beispielsweise die Sichtseite des herzustellenden Spritzguss-Bauteils. Mittels des jeweiligen Blechteils 5, kann das Spritzguss-Bauteil mit einer verbesserten Oberflächenqualität hergestellt werden, wie im Folgenden noch erläutert wird. Falls z.B. die Sichtseite des herzustellenden Spritzguss-Bauteils zwischen der ersten und zweiten Formhälfte 2, 3 verläuft, kann auch die zweite Formhälfte 3 mit einem Heizplattenelement, hier z.B. Blechteil, versehen werden, wie in dem Beispiel in Fig. 4 und 5 illustriert ist.

Die wenigstens eine Zuführung 7 zum Einspritzen des Spritzgussmaterials in den Formhohlraum 6 ist ist dabei erfindungsgemäß in der Formhälfte 3 vorgesehen werden, welche kein Heizplattenelement 4 aufweist, wie in dem Ausführungsbeispiel in Fig. 2 und 3 stark vereinfacht und rein schematisch dargestellt ist. Die Zuführung 7 ist dabei mit einer Zuführungseinrichtung 9 zum Einspritzen des Spritzgussmaterials in den Formhohlraum 6 verbunden.

Obwohl nicht zur vorliegenden Erfindung gehörend, ist es aber denkbar die Zuführung 7 in einer Formhälfte 3 auch durch deren vorhandenes Heizplattenelement 4 hindurch in den Formhohlraum 6 vorzusehen, beispielsweise wenn beide Formhälften 2 und 3 durchgehend jeweils mit einem Heizplattenelement versehen sind, wie in dem Beispiel in Fig. 4 und 5 gezeigt ist. Die Zuführung 9 ist dabei gegenüber dem Heizplattenelement 4 derart elektrisch isoliert ausgebildet, dass ein Kurzschluss zwischen der Zuführung 7, der Formhälfte 3 und dem Heizplattenelement 4 verhindert wird.

Das an der jeweiligen Formhälfte 2 bzw. 3 befestige Heizplattenelement 4, z.B. Blechteil 5, ragt zumindest mit einem Abschnitt 10 auf einer oder wie in den Ausführungsbeispielen in Fig. 2 und 3 bzw. 4 und 5 gezeigt ist, auf beiden Seiten aus der Formhälfte 3 bzw. 2 heraus, um an eine jeweilige Energiequelle 11 angeschlossen zu werden zum elektrischen Beheizen des Heizplattenelements 4. Die Energiequelle 11 weist dabei wenigstens eine Stromquelle und/oder eine Spannungsquelle auf.

In den in den Fig. 2 und 3 bzw. Fig. 4 und 5 gezeigten Ausführungsbeispielen erstreckt sich das Heizplattenelement 4 z.B. über die gesamte Innenseite der Formhälfte 2 bzw. 3 oder zumindest über den gesamten durch diese Formhälfte 2 bzw. 3 gebildeten Teil des Formhohlraums 6 bzw. der Kavität. Falls die Sichtseite des herzustellenden SpritzgussBauteils sich z.B. nicht über diese gesamte zugeordnete Formhälfte 2 bzw. 3 erstreckt, kann das jeweilige Heizplattenelement 4 z.B. derart vorgesehen sein, dass es sich nur über den Bereich dieser Formhälfte 2 bzw. 3 erstreckt, die mit dem Heizplattenelement 4 die Sichtseite des SpritzgussBauteils bildet. Das Heizplattenelement 4 ragt jedoch, auch hier, mit wenigstens einem Abschnitt 10 aus der Formhälfte 2 bzw. 3 heraus, um an die zugeordnete Stromquelle 11 angeschlossen zu werden.

Der aus der Formhälfte 2 bzw. 3 herausragende Abschnitt 10 des jeweiligen Heizplattenelements 4 wird mit einem oder mehreren Kontakten 12 zur Energiezufuhr versehen. Die Kontakte 12 sind dabei an die zugeordnete Energiequelle 11 angeschlossen. Des Weiteren sind die mit der Energiequelle 11 verbundenen Kontakte 12 derart an dem Abschnitt 10 oder Abschnitten 10 des jeweiligen Heizplattenelements 4 angeordnet, dass das Heizplattenelement 4 z.B. möglichst flächig beheizbar ist.

Dabei kann z.B. eine Stromstärke von größer 100A oder eine Spannung von größer 40V an das Heizplattenelement 4, hier z.B. das Blechteil 5 in Fig. 2 und 3 bzw. Fig. 4 und 5, über die Kontakte 12 und die Energiequelle 11 angelegt werden. Das Blechteil 5 weist hierbei eine Dicke z.B. in einem Bereich von 0,1mm bis 4mm auf. Aufgrund der geringen Dicke des Blechteils 5 und der im Verhältnis dazu hohen Stromstärke erwärmt sich das Blechteil 5 innerhalb weniger Sekunden beispielsweise auf eine Temperatur von mehr als 100°C.

In einem Ausführungsbeispiel wird das Blechteil 5 auf eine Temperatur in einem Bereich zwischen 130°C und 170°C erwärmt. Ist dieser Temperaturbereich erreicht, so kann mit einem Einspritzvorgang gestartet werden zum Herstellen eines geschäumten Spritzguss-Bauteils.

Abhängig von der Fließweglänge des eingespritzten Kunststoffs zu dem herzustellenden Bauteil wird die Stromzufuhr durch die Energiequelle 11, z.B. in Form wenigstens einer Stromquelle, mit Ende des Einspritzvorgangs oder auch noch vor dem Ende des Einspritzvorgangs gestoppt. Je nach eingespritzem Material ist die Fließweglänge unterschiedlich.

Das Blechteil 5 als Beispiel für ein Heizplattenelement 4 beginnt sich dabei abzukühlen. Dieser Abkühlvorgang kann in einem Ausführungsbeispiel durch das Spritzgusswerkzeug 1 wahlweise zusätzlich unterstützt werden. Dabei kann wenigstens eine Formhälfte 2, 3 des Spritzgusswerkzeugs 1 mit einer zusätzlichen Temperiereinrichtung 18 ausgebildet sein zum Kühlen und/oder Heizen der Formhälfte 2, 3, wie in den Ausführungsbeispielen in Fig. 2 und 3 bzw. Fig. 4 und 5 gezeigt ist. Die Temperiereinrichtungen 18 der ersten und zweiten Formhälfte 2, 3 sind dabei stark vereinfacht und nicht maßstäblich in Fig. 2 und 3 sowie in Fig. 4 und 5 jeweils mit einer strichpunktierten Linie angedeutet. Die Temperiereinrichtung 18 kann sich wenigstens entlang eines Abschnitts der zugeordneten Formhälfte 2, 3 erstrecken.

Um den Abkühlvorgang zu unterstützen kann die Formhälfte 2, 3 des Spritzgusswerkzeugs 1 mittels ihrer Temperiereinrichtung 18 zusätzlich z.B. gekühlt werden.

Die thermische Isolierung durch das Klebemittel 8 zum Befestigen des jeweiligen Heizplattenelements 4 an der Formhälfte 2 in dem Ausführungsbeispiel in Fig. 2 und 3 bzw. an der Formhälfte 2 und der Formhälfte 3 in dem Beispiel in Fig. 4 und 5, ist dabei vorzugsweise ausreichend gering, so dass keine, im Wesentlichen keine oder nur eine geringfügige Zyklusverlängerung verursacht wird, verglichen mit einem konventionellen Spritzgussvorgang.

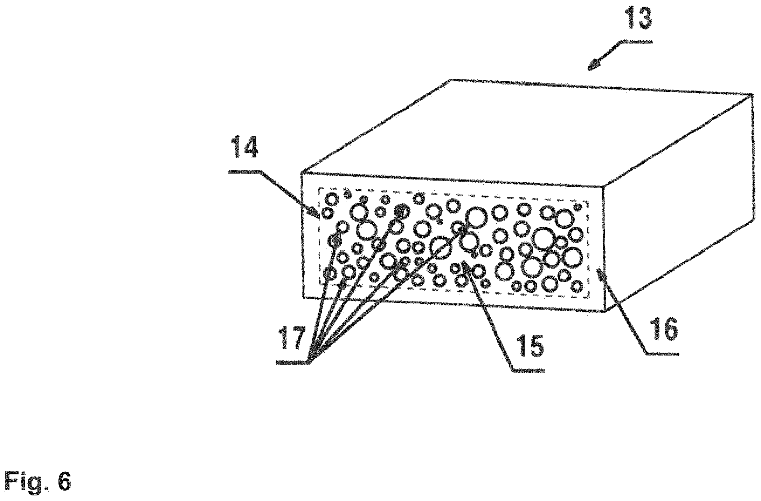

In Fig. 6 ist eine Schnittansicht des, mittels des Spritzgusswerkzeugs der Fig. 1-3, fertig hergestellten Spritzguss-Bauteils 13 gezeigt. Ein mittels des Spritzgusswerkzeugs gemäß der Fig. 1 und 4-5 hergestelltes SpritzgussBauteil entspricht dabei prinzipiell dem in Fig. 6 gezeigten Spritzgussbauteil, so dass die Ausführungen zu Fig. 6 entsprechend auch für das Beispiel gemäß der Fig. 4 und 5 gelten und daher nicht wiederholt werden. Bei dem Einsatz eines Spritzgusswerkzeugs mit dem Aufbau gemäß dem in Fig. 4 und 5 gezeigten Beispiel kann dabei nicht nur die Oberseite sondern auch die Unterseite des Spritzgussbauteils als Sichtfläche dienen, da beide Formhälften mit einem Heizplattenelement versehen sind.

Wie zuvor beschrieben, wird das Spritzgussmaterial in dem Formhohlraum oder der Kavität des Spritzgusswerkzeugs, wie es in den Fig. 1-5 gezeigt ist, geschäumt. Das Schäumen des Spritzgussmaterials kann dabei mittels eines chemischen Treibmittels und/oder eines physikalischen Treibmittels erfolgen.

Bei dem chemischen Treibverfahren, werden die das Spritzgussmaterial aufschäumenden Gase beispielsweise bei der Polymerisation frei, wie im Falle von Polyurethan (PU)-Schäumen. Dabei wird ein chemisches Treibmittel dem Basispolymer bei der Verarbeitung, z.B. pulverförmig oder als Granulat, zugemischt. Das chemische Treibmittel zersetzt sich oberhalb einer bestimmten Prozesstemperatur und spaltet ein Treibgas ab, welches sich in der Polymerschmelze löst.

Bei dem physikalischen Treibverfahren wird dem Spritzgussmaterial ein physikalisches Treibmittel zugesetzt, beispielsweise ein Treibgas wie CO₂ oder N₂. Im Gegensatz zu chemischen Treibmitteln findet hier keine Zersetzungsreaktion statt. Die Polymerschmelze wird direkt mit dem notwendigen Treibgas beladen, wobei eine entsprechende Gasdosierung erfolgt, die größere Gasmengen in dem Polymer lösen kann.

Durch das Schäumen des Spritzgussmaterials kann eine Integralschaumstruktur 14 erhalten werden mit einem geschäumten Kern 15 und einer kompakten Randschicht 16. Der geschäumte Kern 15 ist dabei mit einer gestrichelten Linie in Fig. 6 und gepunkteten Blasen 17 stark vereinfacht und rein schematisch dargestellt. Das Schäumen des Spritzgussmaterials kann dabei durch wenigstens einen Prozessparameter, wie z.B. den Einspritzdruck, die Einspritztemperatur, die Temperatur oder den Temperaturverlauf des in den Formholraum eingespritzten Spritzgussmaterials, die Teilewandstärke des herzustellenden Bauteils und/oder den Aufschäumgrad usw. beeinflusst werden. Zur Bestimmung der Einspritztemperatur sowie der Temperatur im Formhohlraum und dem Temperaturverlauf im Formhohlraum können ein oder mehrere Temperatursensoren vorgesehen werden.

Bei dem Spritzgussteil wird beispielsweise eine möglichst homogene Verteilung über dem Teilequerschnitt angestrebt. Im Allgemeinen gilt folgendes: Mit dem physikalischen Schäumen wird in der Regel eine gleichmäßigere Schaumstruktur erzielt. Wobei die Blasen hier häufiger und kleiner sind. Beim chemischen Schäumen ist die Struktur etwas ungleichmäßiger mit weniger und größeren Blasen.

Die Darstellung des fertigen Bauteils 13 als plattenförmiges Element in Fig. 6 ist lediglich beispielhaft und dient nur zu Veranschaulichung des Prinzips der Erfindung. Grundsätzlich kann das fertige Bauteil 13 eine beliebig komplexe Form aufweisen mit z.B. Vertiefungen, Erhebungen, Wölbungen usw.. Als Bauteil 13 können alle Arten von Bauteilen hergestellt werden, insbesondere solche, bei denen hohe Anforderungen, z.B. eine sogenannte "A-Surface-Qualität", an die Sichtfläche gestellt werden. In Verbindung mit der immer stärker werdenden Forderung nach Teilegewichtsreduzierung eröffnet die Erfindung neue Möglichkeiten hinsichtlich der notwendigen CO₂-Reduzierung beispielsweise in der Automobilindustrie. So können z.B. Zierleisten, Säulenverkleidungen, Türverkleidungen, Radläufe, Schweller, Spoiler, die Instrumententafel oder Teile davon sowie weitere Kunststoff-Bauteile für den Innenbereich und dem Außenbereich bei einem Fahrzeug hergestellt werden. Auch ist das Herstellen von Bauteilen aus geschäumtem Kunststoff z.B. im Bereich der Medizintechnik möglich, insbesondere von sog. "weißer Ware".

Die Erfindung ist jedoch auf die genannten Beispiele und Anwendungsbereiche wie Automobilbau, Nicht-Automobile-Anwendungen und Medizintechnik nicht beschränkt, so kann jedes Bauteil ausgebildet werden, welches geeignet ist mittels des Spritzgusswerkzeugs hergestellt zu werden. Dies gilt für die unterschiedlichsten technischen Gebiete. Mittels des Vorsehens wenigstens eines elektrisch beheizbaren Heizplattenelements an einer Formhälfte eines Spritzgusswerkzeugs und dem Schäumen des Spritzgussmaterials in dem Spritzgusswerkzeug können beliebige Spritzgussteile hergestellt werden. Insbesondere können auf diese Weise geschäumte Bauteile, sowohl bei Einsatz eines chemischen als auch eines physikalischen Treibmittels, mit einer hochwertigen Oberfläche hergestellt werden, ohne oder im Wesentlichen ohne sogenannte Silberschlieren.

Des Weiteren können neben kleinen auch großflächige geschäumte Bauteile, insbesondere für den Fahrzeuginnenbereich und Fahrzeugaußenbereich, mit einem deutlich geringeren Gewicht hergestellt werden, ohne bei der Oberflächenqualität Abstriche machen zu müssen. Beispielsweise kann je nach Produktdesign bei dem Bauteil eine Gewichtsersparnis in einem Bereich von z.B. 10% bis 40% erzielt werden.

Neben der Teilegewichts-Reduzierung liegen weitere Vorteile in der Reduzierung der Maschinenschließkraft des Spritzgusswerkzeugs, sowie in der Reduzierung der Werkzeugkosten, der Reduzierung des Teilepreises und dem höheren Einsatz eines Re-Granulats. Bei dem Re-Granulat wird dabei das hergestellte Kunststoff-Bauteil oder zumindest ein Teil davon später zu Re-Granulat recycled, um es als Re-Granulat für ein neues Bauteil oder Produkt einzusetzen. Bei dem Re-Granulat ist es z.B. das Ziel es möglichst beim gleichen Produkt wieder einzusetzen.

Das elektrische Aufheizen des Heizplattenelements erlaubt zudem ein gezieltes Steuern und/oder Regeln des Aufheizens oder anschließenden Abkühlens des Heizplattenelements durch ein gezieltes Steuern und/oder Regeln des durch die Energiequelle 11 angelegten Stroms oder angelegten Spannung. Wie zuvor beschrieben weist die Energiequelle 11 wenigstens eine Stromquelle und/oder Spannungsquelle auf. Zum Steuern und/oder Regeln der Temperatur des Spritzgussmaterials im Formhohlraum mittels der Temperiereinrichtung werden z.B. ein oder mehrere Temperatursensoren eingesetzt mit welchen die Temperatur des Spritzgussmaterials im Formhohlraum direkt oder indirekt bestimmbar ist.

So kann das Heizplattenelement kontinuierlich oder diskontinuierlich geheizt und/oder abgekühlt werden durch Anpassen der an das Heizplattenelement angelegten Spannung oder angelegten Stroms.

Obwohl die vorliegende Erfindung anhand bevorzugter Ausführungsbeispiele vorstehend vollständig beschrieben wurde, wird der Schutzumfang der Erfindung durch den Inhalt der Ansprüche definiert und begrenzt.

### Bezugszeichenliste

- 1: Spritzgusswerkzeug
- 2: Erste Formhälfte
- 3: Zweite Formhälfte
- 4: Heizplattenelement
- 5: Blechteil
- 6: Formhohlraum
- 7: Zuführung
- 8: Klebemittel
- 9: Zuführungseinrichtung
- 10: Abschnitt
- 11: Energiequelle
- 12: Kontakt
- 13: Spritzguss-Bauteil
- 14: Integralschaumstruktur
- 15: Kern
- 16: Randschicht
- 17: Blasen
- 18: Temperiereinrichtung
- 19: Elektrische Isolierung

## Patentansprüche

1. Spritzgusswerkzeug (1) zur Herstellung eines SpritzgussBauteils (13), insbesondere eines geschäumten SpritzgussBauteils, aufweisend:
eine erste Formhälfte (2) und eine zweite Formhälfte (3), wobei wenigstens eine Formhälfte (2) auf ihrer Innenseite zumindest in einem Bereich mit einem elektrisch beheizbaren Heizplattenelement (4, 5) versehen ist, wobei das Heizplattenelement (4, 5) auswechselbar mit wenigstens einem Befestigungsmittel (8) an der Formhälfte (2, 3) befestigt ist und einen Teil eines Formhohlraums (6) des Spritzgusswerkzeugs (1) bildet, in welchen Spritzgussmaterial einspritzbar ist,
wobei wenigstens ein Abschnitt (10) des Heizplattenelements (4, 5) aus der zugeordneten Formhälfte (2, 3) hervorsteht und mit wenigstens einem Kontakt (12) versehen ist zum Anschließen des Heizplattenelements (4, 5) an eine Energiequelle (11) zum elektrischen Beheizen des Heizplattenelements (4),
wobei wenigstens eine Formhälfte (2, 3) eine Zuführung (7) zum Zuführen von Spritzgussmaterial, insbesondere schäumendem Spritzgussmaterial aufweist, wobei die Zuführung (7) dabei in der Formhälfte (2, 3) ohne Heizplattenelement (4, 5) vorgesehen ist.

2. Spritzgusswerkzeug nach Anspruch 1,
**dadurch gekennzeichnet,**
**dass** das wenigstens eine Befestigungsmittel (8) zum auswechselbaren Befestigen des Heizplattenelements (4, 5) an der zugeordneten Formhälfte (2, 3) elektrisch isolierend ist und eine elektrische Isolierung zwischen dem Heizplattenelement (4, 5) und der zugeordneten Formhälfte (2, 3) bereitstellt und wobei das wenigstens eine Befestigungsmittel (8) insbesondere thermisch isolierend vorgesehen ist.

3. Spritzgusswerkzeug nach einem der vorstehenden Ansprüche,
**dadurch gekennzeichnet,**
**dass** das wenigstens eine Befestigungsmittel (8) zum auswechselbaren Befestigen des Heizplattenelements (4, 5) ein Klebemittel (8) ist, wobei das Klebemittel (8) eine Klebeschicht, ein flüssiger Klebstoff oder ein pastöser Klebstoff ist und wobei das Klebemittel (8) vorzugsweise elektrisch isolierend ist.

4. Spritzgusswerkzeug nach einem der vorstehenden Ansprüche,
**dadurch gekennzeichnet,**
**dass** die Zuführung (7) mit einer Zuführungseinrichtung (9) für Spritzgussmaterial, insbesondere schäumendes Spritzgussmaterial, verbunden ist, zum Einspritzen von mit einem chemischen Treibmittel und/oder einem physikalischen Treibmittel versehenen Spritzgussmaterial in dem Formhohlraum (6) des Spritzgusswerkzeugs (1).

5. Spritzgusswerkzeug nach einem der vorstehenden Ansprüche,
**dadurch gekennzeichnet,**
**dass** wenigstens eine der Formhälften (2, 3) eine zusätzliche Temperiereinrichtung (18) aufweist, wobei die Temperiereinrichtung (18) zum Kühlen und/oder Heizen der Formhälfte (2, 3) und gegebenenfalls eines mit der Formhälfte (2, 3) verbundenen Heizplattenelements (4, 5) ausgebildet ist.

6. Spritzgusswerkzeug nach einem der vorstehenden Ansprüche,
**dadurch gekennzeichnet,**
**dass** zumindest das Heizplattenelement (4, 5) und/oder das wenigstens eine Befestigungsmittel (8) nach mindestens einem Spritzgusszyklus auswechselbar ist.

7. Spritzgusswerkzeug nach einem der vorstehenden Ansprüche,
**dadurch gekennzeichnet,**
**dass** das Heizplattenelement (4, 5) ein Blechteil (5) ist, insbesondere aus Aluminium, insbesondere einer Aluminiumlegierung, Stahl oder Stahllegierung.

8. Spritzgusswerkzeug nach Anspruch 7,
**dadurch gekennzeichnet,**
**dass** das Blechteil (5) eine Dicke in einem Bereich von 0,1mm bis 4mm aufweist.

9. Spritzgusswerkzeug nach einem der Ansprüche 3 bis 8,
**dadurch gekennzeichnet,**
**dass** das Klebemittel (8) eine Klebemittel-Schichtdicke von kleiner als 0,3mm aufweist.

10. Spritzgusswerkzeug nach einem der Ansprüche 7, 8 oder 9,
**dadurch gekennzeichnet,**
**dass** an das Blechteil (5) eine Spannung von größer 40V oder eine Stromstärke von größer 100A anlegbar ist und das Blechteil (5) insbesondere auf eine Temperatur in einem Bereich von 130°C bis 170°C aufheizbar ist, wobei die Energiequelle (11) wenigstens eine Stromquelle und/oder eine Spannungsquelle aufweist.

11. Verfahren zum Herstellen eines Spritzguss-Bauteils (13), insbesondere eines geschäumten Spritzguss-Bauteils, mit einem Spritzgusswerkzeug (1) nach einem der vorstehenden Ansprüche.

12. Verfahren nach Anspruch 11,
**dadurch gekennzeichnet,**
**dass** mindestens einer der nachfolgenden Schritte durchgeführt wird:
Aufheizen des Heizplattenelements (4, 5) auf eine vorbestimmte Einspritz-Temperatur durch Anlegen einer Spannung oder eines Stroms an das Heizplattenelement (4, 5) mittels der Stromquelle;
Aufheizen des Heizplattenelements (4, 5) auf eine Einspritz-Temperatur in einem Bereich von 130°C bis 170°C zum Einspritzen des Spritzgussmaterials in den Formhohlraum (6);
Einspritzen eines mit einem chemischen Treibmittel und/oder einem physikalischen Treibmittel versehenen Kunststoffs als Spritzgussmaterial in den Formhohlraum (6) des Spritzgusswerkzeugs (1) zum Herstellen eines geschäumten Spritzgussteils (13);
Temperieren wenigstens einer Formhälfte (2, 3) durch Kühlen und/oder Heizen der Formhälfte (2, 3);
kontinuierliches oder diskontinuierliches Aufheizen und/oder Kühlen des Heizplattenelements (4, 5);
Steuern und/oder Regeln der an das Heizplattenelement (4, 5) angelegten Spannung und/oder Stromstärke.

## Claims

1. Injection moulding tool (1) for manufacturing an injectionmoulded component (13), in particular a foamed injection moulded component, having:
a first mould half (2) and a second mould half (3), at least one mould half (2) being equipped on its inner face at least in one region with an electrically heatable heating plate element (4, 5), wherein the heating plate element (4, 5) is fastened interchangeably by at least one fastening means (8) to the mould half (2, 3) and forms one portion of a mould cavity (6) of the injection moulding tool (1), into which injection moulding material can be injected,
wherein at least one portion (10) of the heating plate element (4, 5) protrudes from the associated mould half (2, 3) and is provided with at least one contact (12) for connecting the heating plate element (4, 5) to an energy source (11) for the electrical heating of the heating plate element (4),
wherein at least one mould half (2, 3) has a feeder (7) for feeding injection moulding material, in particular foaming injection moulding material, with the feeder (7) being provided in the mould half (2, 3) without a heating plate element (4, 5).

2. Injection moulding tool according to claim 1, **characterised in that** the at least one fastening means (8) is electrically insulating for the interchangeable fastening of the heating plate element (4, 5) to the associated mould half (2, 3) and provides electrical insulation between the heating plate element (4, 5) and the associated mould half (2, 3) and wherein the at least one fastening means (8) is thermally insulating in particular.

3. Injection moulding tool according to any one of the preceding claims, **characterised in that** the at least one fastening means (8) for interchangeably fastening the heating plate element (4, 5) is an adhesive (8), said adhesive (8) being an adhesive layer, a liquid adhesive or a paste-like adhesive and wherein the adhesive (8) is preferably electrically insulating.

4. Injection moulding tool according to any one of the preceding claims, **characterised in that** the feeder (7) is connected to a feed device (9) for injection moulding material, in particular foaming injection moulding material, for injecting injection moulding material provided with a chemical blowing agent and/or a physical blowing agent in the mould cavity (6) of the injection moulding tool (1).

5. Injection moulding tool according to any one of the preceding claims, **characterised in that** at least one of the mould halves (2, 3) has an additional temperature adjustment device (18), said temperature adjustment device (18) being provided for cooling and/or heating the mould half (2, 3) and optionally a heating plate element (4, 5) connected to the mould half (2, 3).

6. Injection moulding tool according to any one of the preceding claims, **characterised in that** at least the heating plate element (4, 5) and/or the at least one fastening means (8) is interchangeable after at least one injection moulding cycle.

7. Injection moulding tool according to any one of the preceding claims, **characterised in that** the heating plate element (4, 5) is a sheet metal part (5), in particular of aluminium, particularly of an aluminium alloy, steel or steel alloy.

8. Injection moulding tool according to claim 7, **characterised in that** the sheet metal part (5) is of a thickness in a range of 0.1 mm to 4 mm.

9. Injection moulding tool according to any one of claims 3 to 8, **characterised in that** the adhesive (8) has an adhesive layer thickness of less than 0.3 mm.

10. Injection moulding tool according to any one of claims 7, 8 or 9, **characterised in that** a voltage greater than 40V or an amperage greater than 100A can be applied to the sheet metal part (5) and the sheet metal part (5) can be heated in particular to a temperature in a range of 130°C to 170°C, wherein the energy source (11) has at least a power source and/or a voltage source.

11. Method of manufacturing an injection moulded component (13), in particular a foamed injection moulded component, by means of an injection moulding tool (1) according to any one of the preceding claims.

12. Method according to claim 11, **characterised in that** at least one of the following steps is performed:
heating the heating plate element (4, 5) to a predefined injection temperature by applying a voltage or current to the heating plate element (4, 5) by means of the power source;
heating the heating plate element (4, 5) to an injection temperature in a range of 130 °C to 170 °C for injecting the injection moulding material into the mould cavity (6);
injecting a plastics material provided with a chemical blowing agent and/or a physical blowing agent as an injection moulding material into the mould cavity (6) of the injection moulding tool (1) for manufacturing a foamed injection moulded component (13);
temperature adjustment of at least one mould half (2, 3) by cooling and/or heating the mould half (2, 3);
continuous or discontinuous heating and/or cooling of the heating plate element (4, 5);
controlling and/or regulating the voltage and/or amperage applied to the heating plate element (4, 5).

## Revendications

1. Outil de moulage par injection (1) destiné à la fabrication d'un composant (13) moulé par injection, en particulier d'un composant expansé moulé par injection, comportant :
un premier demi-moule (2) et un second demi-moule (3), au moins un demi-moule (2) étant pourvu sur son côté intérieur au moins dans une zone d'un élément de plaque chauffante (4, 5) pouvant être chauffé électriquement, l'élément de plaque chauffante (4, 5) étant fixé de manière remplaçable sur le demi-moule (2, 3) au moyen d'au moins un moyen de fixation (8) et formant une partie d'une cavité de moule (6) de l'outil de moulage par injection (1), dans laquelle du matériau de moulage par injection peut être injecté,
au moins une portion (10) de l'élément de plaque chauffante (4, 5) dépassant du demi-moule (2, 3) associé et étant pourvue d'au moins un contact (12) destiné à raccorder l'élément de plaque chauffante (4, 5) à une source d'énergie (11) pour chauffer électriquement l'élément de plaque chauffante (4),
au moins un demi-moule (2, 3) comportant une alimentation (7) pour l'alimentation de matériau de moulage par injection, en particulier de matériau de moulage par injection moussant, l'alimentation (7) étant alors prévue dans le demi-moule (2, 3) sans élément de plaque chauffante (4, 5).

2. Outil de moulage par injection selon la revendication 1,
**caractérisé en ce que**
l'au moins un moyen de fixation (8) pour la fixation remplaçable de l'élément de plaque chauffante (4, 5) sur le demi-moule (2, 3) associé est électriquement isolant et assure une isolation électrique entre l'élément de plaque chauffante (4, 5) et le demi-moule (2, 3) associé et l'au moins un moyen de fixation (8) étant en particulier prévu thermiquement isolant.

3. Outil de moulage par injection selon l'une des revendications précédentes,
**caractérisé en ce que**
l'au moins un moyen de fixation (8) pour la fixation remplaçable de l'élément de plaque chauffante (4, 5) est une matière collante (8), la matière collante (8) étant une couche collante, une colle liquide ou une colle pâteuse et la matière collante (8) étant de préférence électriquement isolante.

4. Outil de moulage par injection selon l'une des revendications précédentes,
**caractérisé en ce que**
l'alimentation (7) est reliée à un moyen d'alimentation (9) pour matériau de moulage par injection, en particulier matériau de moulage par injection moussant, pour injecter du matériau de moulage par injection doté d'un agent porogène chimique et/ou d'un agent porogène physique dans la cavité de moule (6) de l'outil de moulage par injection (1).

5. Outil de moulage par injection selon l'une des revendications précédentes,
**caractérisé en ce que**
au moins un des demi-moules (2, 3) comporte un moyen d'équilibrage de température (18) supplémentaire, le moyen d'équilibrage de température (18) étant conçu pour refroidir et/ou chauffer le demi-moule (2, 3) et le cas échéant un élément de plaque chauffante (4, 5) relié au demi-moule (2, 3) .

6. Outil de moulage par injection selon l'une des revendications précédentes,
**caractérisé en ce que**
au moins l'élément de plaque chauffante (4, 5) et/ou l'au moins un moyen de fixation (8) peut être remplacé après au moins un cycle de moulage par injection.

7. Outil de moulage par injection selon l'une des revendications précédentes,
**caractérisé en ce que**
l'élément de plaque chauffante (4, 5) est une pièce en tôle (5), en particulier en aluminium, en particulier en un alliage d'aluminium, en acier ou un alliage d'acier.

8. Outil de moulage par injection selon la revendication 7,
**caractérisé en ce que**
la pièce en aluminium (5) présente une épaisseur comprise entre 0,1 mm et 4 mm.

9. Outil de moulage par injection selon l'une des revendications 3 à 8, **caractérisé en ce que**
la matière collante (8) présente une épaisseur de couche de matière collante inférieure à 0,3 mm.

10. Outil de moulage par injection selon l'une des revendications 7, 8 ou 9,
**caractérisé en ce que**
une tension supérieure à 40 V ou une intensité de courant supérieure à 100 A peut être appliquée à la pièce en tôle (5) et la pièce en tôle (5) peut être chauffée en particulier à une température comprise entre 130 °C et 170 °C, la source d'énergie (11) comportant au moins une source de courant et/ou une source de tension.

11. Procédé de fabrication d'un composant (13) moulé par injection, en particulier d'un composant expansé moulé par injection, au moyen d'un outil de moulage par injection (1) selon l'une des revendications précédentes.

12. Procédé selon la revendication 11,
**caractérisé en ce que**
au moins une des étapes suivantes est exécutée :
chauffage de l'élément de plaque chauffante (4, 5) à une température d'injection prédéfinie par application d'une tension ou d'un courant à l'élément de plaque chauffante (4, 5) au moyen de la source de courant ;
chauffage de l'élément de plaque chauffante (4, 5) à une température d'injection comprise entre 130 °C et 170 °C pour injecter le matériau de moulage par injection dans la cavité de moule (6) ;
injection d'une matière plastique dotée d'un agent porogène chimique et/ou d'un agent porogène physique comme matériau de moulage par injection dans la cavité de moule (6) de l'outil de moulage par injection (1) afin de fabriquer un composant (13) expansé moulé par injection ;
équilibrage de la température d'au moins un demi-moule (2, 3) par refroidissement et/ou chauffage du demi-moule (2, 3) ;
chauffage et/ou refroidissement continu ou discontinu de l'élément de plaque chauffante (4, 5) ;
commande et/ou régulation de la tension et/ou de l'intensité de courant appliquée à l'élément de plaque chauffante (4, 5) .
